# EUROPEAN PATENT SPECIFICATION

(11) **EP 4 285 255 B1**
(45) Date of publication and mention of the grant of the patent: **25.06.2025**
(21) Application number: 22708345.8
(22) Date of filing: 25.01.2022
(51) Int. Cl.: G06F 21/53, G06F 21/73

(54) **TRUSTED EXECUTION ENVIRONMENT TO PROVIDE ATTESTATION OF CODE EXECUTION RESULT**
VERTRAUENSWÜRDIGE AUSFÜHRUNGSUMGEBUNG ZUR BEREITSTELLUNG VON BESTÄTIGUNGEN VON CODEAUSFÜHRUNGSERGEBNISSEN
ENVIRONNEMENT D'EXÉCUTION DE CONFIANCE POUR FOURNIR UNE ATTESTATION DE RÉSULTAT D'EXÉCUTION DE CODE

(30) Priority: 29.01.2021 US 202163143733 P; 05.02.2021 US 202163146138 P
(43) Date of publication of application: 06.12.2023
(73) Proprietor: SECUROSYS SA, 8048 Zürich (CH)
(72) Inventor: DASEN, Marcel P., 8005 Zürich (CH); RAEMY, Melanie R., 8005 Zürich (CH)
(74) Representative: Bardehle Pagenberg Partnerschaft mbB Patentanwälte Rechtsanwälte
(86) International application number: PCT/EP2022/051623
(87) International publication number: WO 2022/161946

(56) References cited:
- US-A1- 2018 212 760
- US-A1- 2020 349 252
- US-B1- 9 584 517
- US-B2- 9 678 687

## Description

This application claims benefit of priority to U.S. Provisional Patent Application Serial No. 63/143,733 filed on January 29, 2021 (the "First Provisional Patent Application"). This application also claims benefit of priority to U.S. Provisional Patent Application Serial No. 63/146,138, filed on February 5, 2021 (the "Second Provisional Patent Application").

### BACKGROUND

### Technical Field

Embodiments described herein are related to secure execution of code in an isolated environment and providing attestation of execution.

### Description of the Related Art

Various approaches to providing at trusted execution environment (TEE) in a computer have been attempted. A TEE can be a secure area of a main processor or computer. The TEE should be an isolated execution environment that provides security features such as isolated execution, integrity of applications executing with the TEE, along with confidentiality of data in the TEE. In general terms, the TEE offers an execution space that provides a higher level of security for trusted applications running on the device. US patent application 2020/349252 A1 and US patents 9 678 687 B2 and 9 584 517 B1 disclose such secure environments for executing applications.

One of the approaches has been to implement various processor features in the central processing unit(s) (CPUs) in a computer system. Examples of such features include the TrustZone in ARM processors and the software guard extensions (SGX) in Intel processors. These approaches provide a "bare bones" set of hardware features and thus requires significant software support (e.g., in the operating system (OS) on the computer system) and thus is somewhat unwieldly and also subject to attack. Typically, such attacks involving exploiting various features of the processors to leak data from the secure environment and thus obtain secrets (e.g., private cryptographic keys, private user data, etc.) from the secure environment. Other attacks involve exploiting system vulnerabilities to modify the OS or the code executing in the secure environment without having the modifications detected. Once the modifications have been made, the compromised code can be used to obtain secrets from the secure environment.

Another approach involves the use of limited execution environments such as Java Card. In these environments, the code that can be executed is often not general and/or rich enough to provide the functionality needed by an application to provide secure execution.

### BRIEF DESCRIPTION OF THE DRAWINGS

The following detailed description refers to the accompanying drawings, which are now briefly described.
Fig. 1 is a block diagram of one embodiment of a secure execution transaction.
Fig. 2 is a block diagram of one embodiment of a system to implement a secure execution transaction.
Fig. 3 is a block diagram of one embodiment of a response packet provided from one embodiment of a secure execution transaction.
Fig. 4 is a flowchart illustrating one embodiment of a secure execution transaction in the system of Fig. 2.
Fig. 5 is a flowchart illustrating one embodiment of monitoring for tamper protection in one embodiment of a secure server computer.
Fig. 6 is a flowchart illustrating one embodiment of an application requesting a secure execution transaction and processing the response packet.
Fig. 7 is a block diagram of another embodiment of a system to implement a secure execution transaction.
Fig. 8 is a block diagram of one embodiment of a secure counter.
Fig. 9 is a flowchart illustrating operation of one embodiment of capture a counter value for a secure execution transaction.
Fig. 10 is a block diagram of one embodiment of a cluster in greater detail.
Fig. 11 is a block diagram of one embodiment of a computer accessible storage medium.
Fig. 12 is a block diagram of one embodiment of a computer system.

While embodiments described in this disclosure may be susceptible to various modifications and alternative forms, specific embodiments thereof are shown by way of example in the drawings and will herein be described in detail. It should be understood, however, that the drawings and detailed description thereto are not intended to limit the embodiments to the particular form disclosed, but on the contrary, the intention is to cover all modifications, equivalents and alternatives falling within the scope of the appended claims. The headings used herein are for organizational purposes only and are not meant to be used to limit the scope of the description.

### DETAILED DESCRIPTION OF EMBODIMENTS

In one embodiment, a secure isolated execution environment may provide a complete hardened execution stack including libraries and a rich interface. Hardened may include that each library is running in its own isolation (process) with strictly monitored contracts of interaction between libraries. This isolation may guarantee that exploitable errors in the code of one library cannot spread to any other library and cannot spread to the code for which the customer (application) desires to have secure execution. The code to be executed securely, provided by the owner of the application, is referred to herein as "customer critical code." Executing the customer critical code in the secure isolated execution environment may provide a provably correct execution of the customer critical code on specific input data to produce output data, and thus the result of the customer critical code can be trusted.

More particularly, in an embodiment, one or more secure server computers may form a TEE that may instantiate the customer critical code to execute on input data. The secure server computer may be in a physically secure location and may monitor for tampering. The secure server computer may be configured to give proof that a known and provably unaltered customer critical code was executed on provable input data to produce output data (a result) which the secure server computer may sign. The secure server computer may further give proof that the execution occurred at a specific instance in time, on a provable execution device including state of the device (e.g., firmware state and/or configuration state). Thus, the secure server computer may give proof of the execution occurring at a specific time in a specific environment. The secure server computer may still further given proof of the number of previous executions (e.g., a secure counter value). The secure server computer may be configured to bind the above information together and attest to the information with an attestation signature.

In an embodiment, the customer critical code and its secure isolated execution environment may be transactional (e.g., the code produces an output in a finite amount of time on a given input, and the customer critical code and its secure isolated execution environment may have no retained state, so that it will produce precisely the same output on the same input even if executed on that same input multiple times). In an embodiment, the customer critical code and the secure isolated execution environment may be newly instantiated in system memory in the secure server computer each time the application (executing on another computer) transmits a request packet with input data. Upon completion of the transaction, the secure server computer may remove the customer critical code and the secure execution environment from system memory, deleting its context and any other data related to the environment. The customer critical code and the other components of the secure execution environment may remain stored on the secure server computer (e.g., on a secure storage device such as various forms of non-volatile storage magnetic disk drives, optical drives, solid state drives, etc.). Thus, even if an attacker were able to cause a modification in a library or even the customer critical code in the system memory, the modification by a malicious attacker would not be persistent to subsequent executions of the customer critical code in new instantiations of the secure execution environment.

In an embodiment, if a state of execution is desired by the application across two or more executions of the customer critical code, the state of execution may be achieved by taking a portion of the output data from one execution and including that portion in the input data for another execution. That is, the state carried from execution to execution may be provided from the output data to the succeeding input data.

There may be a variety of use cases for secure isolated execution of customer critical code. For example, automatic approvals of any kind of real world transaction may be provided via execution of the customer critical code. The code may examine the real world transaction and assure that it meets a set of rules specified by the customer/application, and may indicate approval or disapproval in the output data based on where or not the real world transaction meets the rules. In an embodiment, the customer critical code may, for example, assess the value of a real world transaction and apply different rules for different values. In a specific example, a real world transaction with a value of a specified value or less may be automatically processed without any additional checks; transactions with a value above the specified value and below a second specified value may employ additional checks (e.g., the credit rating of the customer and/or further verification of the identity of the customer); and transactions with a value above the second specified limit may be subject to ever further scrutiny, e.g., manual inspection. The customer critical code may determine if an individual is on a list of exposed or sanctioned persons and thus is not permitted to act. On the other hand, a whitelist of valid sender/receiver pairs for a real world transaction may be maintained, and the customer critical code may verify a given pair is on the list. The customer critical code may enable the automatic execution of digital contracts. The customer critical code may provide validation of transactions for blockchain systems such as crypto-currencies. The customer critical code may provide electronic notary services. The customer critical code may provide regulatory compliance filtering. The customer critical code may provide confidential computation over data from several parties (e.g., the parties may provide encrypted input data and the output may be a computation across the input data without revealing one party's data to another party). The customer critical code may be used to enforce digital rights management. The customer critical code may be used for authentication of individuals via biometric data (e.g., the biometric data may be encrypted and provided to the secure server computer along with encrypted biometric data previously recorded for various users, and the customer critical code executing on the secure server may be the only location where the biometric data may be decrypted and compared. The cryptographic keys may be maintained in the secure server computer, or in an HSM partition on the secure server computer. Any other confidential data may be provided in encrypted form and the customer critical code may decrypt the data through the HSM partition using cryptographic keys in the secure server computer and thus not available elsewhere. Thus, the isolated secure execution environment performing transactional execution of the customer critical code may be applied to any process where compliance with certain rules need to be enforced.

Employing the secure server computer(s) may take the burden of security assessment from the remaining bulk of non-critical application code in various applications, since modifications of the customer critical code (by an authorized party such as a security officer at a company) may not affect the logic of the outcome but may lead to denial of service. As such it, the secure execution server may greatly facilitate public cloud deployment of applications.

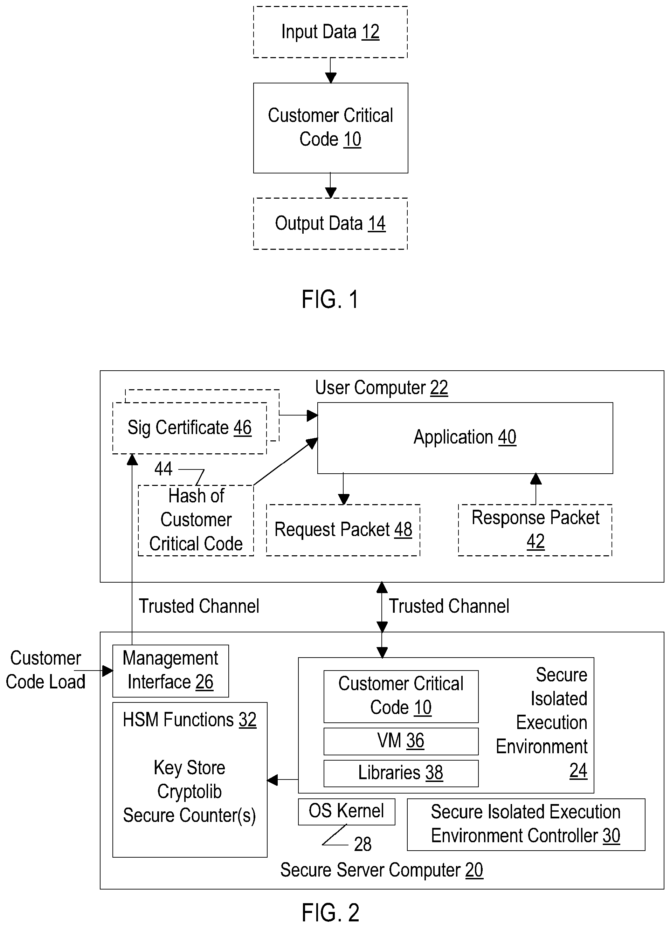

Fig. 1 is a block diagram of one embodiment of a transaction. An application may generate input data 12, which it may provide to customer critical code 10. The customer critical code 10 may execute on the input data 12 and may provide output data 14. The same output data 14 may be provided by the customer critical code 10 for the same input data 12, for any execution of the customer critical code 10 at any time and on a secure server computer. In the Figs. 1-3, data or data structures are illustrated as dotted boxes. Code or hardware are illustrated as solid boxes. Generally, various terms for code (e.g., code, code sequence, program, application, thread, etc.). may refer to a plurality of computer-executable instructions. When executed by the processor(s) on a computer, the plurality of instructions may cause the computer to perform operations, such as the operations described for the various code herein.

Fig. 2 is a block diagram of one embodiment of a system to implement a secure execution transaction. In the illustrated embodiment, at least one secure server computer system 20 is coupled to a user computer system 22. The computer systems may be more briefly referred to herein as computers. In various embodiments, the computers 20 and 22 may be coupled over a network, which may be any wired or wireless network (or any combination of wired and wireless networks) such as the Internet, a local area network, a wide area network, cellular networks, broadband wireless networks, etc. The secure server computer 30 may be one of multiple secure server computers, for example in a cloud computing cluster or clusters or various geographically distributed computing environments.

The secure server computer 20 may support one or more secure isolated execution environments such as the secure isolated execution environment 24, as well as a management interface 26, an OS kernel 28, a secure isolated execution environment controller 30, and a plurality of hardware security module (HSM) functions 32 such as a cryptographic key store, cryptographic libraries (cryptolib), and one or more secure counters. In the illustrated embodiment, the secure isolated execution environment 24 includes the customer critical code 10, a virtual machine 36, and one or more libraries 38.

The user computer 22 may support an application 40 that makes use of the customer critical code 10. The application 40 may generate a request packet 48 including input data 12 for the customer critical code 10, and may receive a response packet 42 that may include the output data 14 and various other data proving the execution of the unmodified customer critical code 10 on the input data 12 to produce the output data 14. The response packet 42 may be digitally signed as an attestation of the contents of the response packet 42 by the secure server computer 20. Similarly, the request packet 48 may be digitally signed by user computer 22 and may be validated by the secure server computer 20. The user computer 22 may also store a hash of the customer critical code (reference numeral 44) and one or more signature certificates 46 as discussed in more detail below.

The management interface 26 may be used to load the customer critical code into the secure server computer 20, and to export signature certificates to the user computer 22 for use in validating response packets provided by the secure server computer 20. The management interface may only be available to a security officer of the entity that owns or manages the user computer 22 (e.g., a company). The security officer(s) may be partition security officers for a partition that performs the secure execution transaction for the customer critical code 10. In an embodiment, at least two security officers are required. The security officer may have a log in that can be used to access the management interface, and one or more forms of authentication may be employed to ensure that an individual logging in is in fact the authorized security officer (e.g., a card and personal identification number (PIN), strong password, biometric data, location data, etc.).

Prior to loading the customer critical code 10 into the secure server computer 20, a hash of the customer critical code 10 may be performed. The hash may be a "fingerprint" of the customer critical code 10, and would change if the customer critical code 10 were modified. Thus, the hash 44 may be provided to the user computer 22 and may be compared to a hash made by the secure server computer 20 over the customer critical code 10 when it is instantiated in the secure isolated execution environment 24 to prove that the customer critical code 10 is the same code that was installed by the security officer.

The security officer may also, through the management interface 26, cause the secure server computer 20 to output the signature certificates 46. A signature certificate 46 may be a signed public key that corresponds to a private key used by the secure server computer 20 to sign various data in the response packet 42, and may thus be used by the user computer 22 to validate and authenticate the signatures. The signature certificates 46 form a root of trust for the user computer 22 and the secure server computer 20, and thus the signature certificates may be transmitted over a trusted channel between the secure server computer 20 and the user computer 22. The trusted channel may be any form of channel over which data can be transmitted safe from intrusion or observation by a third party. For example, a secure remote procedure call (RPC) such as the gRPC developed by Google Inc. may be used as a trusted channel to transport the signature certificates directly to the application 40 from a computer that is known and trusted by the user computer 22. In another embodiment, the security certificates may be exported over the management channel to the management interface 26, and manually transferred to the application. In another embodiment, the root of trust certificate may be downloaded onto the user computer 22 from a known and trusted source (e.g., a web site associated with the company that provides the secure server computer 22, or a portal). Another gRPC or other trusted channel may be used as the trusted channel for transmitting the request packet 48 and the response packet 42 between the user computer 22 and the secure server computer 20.

The keys used by the secure server computer 20 may be part of the HSM functions 32. In an embodiment, an HSM partition may be configured into the secure server computer 20. The HSM functions 32 may handle the secure key storage as well as various cryptographic functions such as encryption/decryption, signing/authentication, etc. using the Cryptolib library shown in Fig. 2. Additionally, the HSM functions 32 may implement the secure counter or counters that may be used as part of the response packet 42, as described in more detail below. There may be one secure counter, or there may be one secure counter per different customer critical code installed in the computer 20. That is, if there are multiple different customer critical code sequences installed (which may be called using different gRPC calls, for example), then there may be a separate secure counter for each code sequence so the counter may be an indication of the number of executions of the corresponding customer critical code sequences.

The secure isolated execution environment 24 may be used to instantiate the customer critical code 10 (e.g., loading the customer critical code 10 into system memory from a secure storage device, and generating a hash of the code for use in the response packet 42). The secure isolated execution environment controller 30 may perform the instantiation and management of secure isolated execution environments 24. There may be multiple environments 24, with instances of customer critical code 10 execution on different input data 12 from different user computers 22 (or multiple sets of input data 12 sent by the user computer 22 in different requests). Each environment 24 may be instantiated based on the receipt of the request packet 48 from a user computer 20, and may be destroyed/removed from system memory upon completion of execution of the customer critical code 10 and transmission of the response packet 42 to the requesting user computer 22. However, the customer critical code 10 and components of the secure isolated execution environment 24 may remain stored on the secure server computer 22 (e.g., on disk storage), as previously mentioned. Accordingly, the execution of the customer critical code 10 may be transactional as previously mentioned.

The secure isolated execution environment controller 30 may be part of the secure isolated execution environment 24 (e.g., part of the virtual machine 36), part of the OS kernel 28, or may be a separate code component. Alternatively, the secure isolated execution environment controller 30 may include multiple components in the environment 24, the OS kernel 28, and/or separate components that operate together to implement the controller 30. The controller 30 may be responsible for instantiating the environment 24, interfacing with the HSM functions 32 for signing of various data, performing hashes to prove that the input data was received unmodified and was operated on by unmodified customer critical code 10, controlling which application 40 may transmit input to the customer critical code 10 for execution, etc.

The secure isolated execution environment 24 may ensure that all interactions between software in the environment 24 (e.g., the customer critical code 10, the virtual machine 36, and the libraries 38) follow a strict and carefully monitored set of predefined rules ("contracts") so that exploitable errors in one code module cannot spread to other modules.

The OS kernel 28 may be responsible for the management of the secure server computer hardware. Any desired kernel may be used in various embodiments (e.g., Linux-based, Unix-based, Microsoft Windows based, etc.).

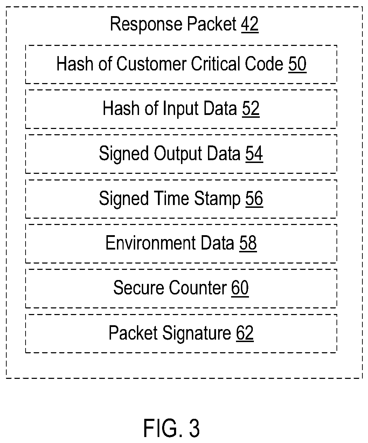

Fig. 3 is a block diagram of one embodiment of the response packet 42. It is noted that, while Fig. 3 is a specific example of an embodiment, numerous other embodiments are possible. Generally, any embodiment that details a relationship between input data, output data, the code executed, and time and environment data and attests to the result may be used. In the illustrated embodiment, the response packet 42 includes a hash of the customer critical code (reference numeral 50). The hash 50 may be captured from the instantiation of the customer critical code 10 in the secure isolated execution environment 24 that is created to process the request packet 48. A comparison of the hash 50 to the hash 44 in the user computer 22 may thus verify that the customer critical code 10 has not been modified on the secure server computer 20.

The response packet 42 may include a hash of the input data 12 (reference numeral 52) that was processed to produce the response packet 42. The hash 52 may be compared to a hash of the input data on the user computer 22 to prove that the input data 12 was indeed operated upon to produce the response packet 42 (e.g., the input data 12 was not modified in transit to the secure server 20 and the secure isolated execution environment 24.

The response packet 42 may include signed output data 54. The output data 14 is signed by the secure server computer 20 (and more particularly in the HSM functions 32) to ensure prove that the output data 14 was produced by the secure server computer 20 by executing the customer critical code 10 on the input data 12.

The response packet 42 may include a signed time stamp 56. The signed time stamp may indicate a time that corresponds to the execution of the customer critical code. For example, the signed time stamp may indicate the time (as maintained on the secure server computer 20) at which the execution of the customer critical code 10 was completed (e.g., the output data was completely calculated). Alternatively, or in addition, the time stamp may indicate the time at which the code 10 began execution on the input data 12, the time at which the code 10 was instantiated in the secure isolated execution environment 24, and/or the time at which the secure isolated execution environment 24 was deleted after completing execution. Multiple time stamps may be recorded in other embodiments to capture instantiation, beginning execution, completing execution and/or any other desired time.

The response packet 42 may include environment data 48. The environment data 48 may describe the hardware and/or firmware and/or other configuration that was in place when the execution occurred. For example, the environment data 48 identify the specific device. For example, the environment data 48 may identify one or more of the computer 20 and/or particular processor on the computer 20 that executed the customer critical code 10, the software version(s) of any software and/or firmware in the computer 20, configuration data indicating how various features of the computer were programmed at the time of execution, and fingerprints (hashes) of each software module in the environment 24, such as the libraries 38 and/or the VM 36. The secure counter 60 may be the value of the secure counter from the HSM functions 32, which may be incremented in response to execution of the customer critical code 10. A packet signature 62 signs the packet 42 and verifies/attests to the contents of the packet 42 as being generated by the secure server computer 20.

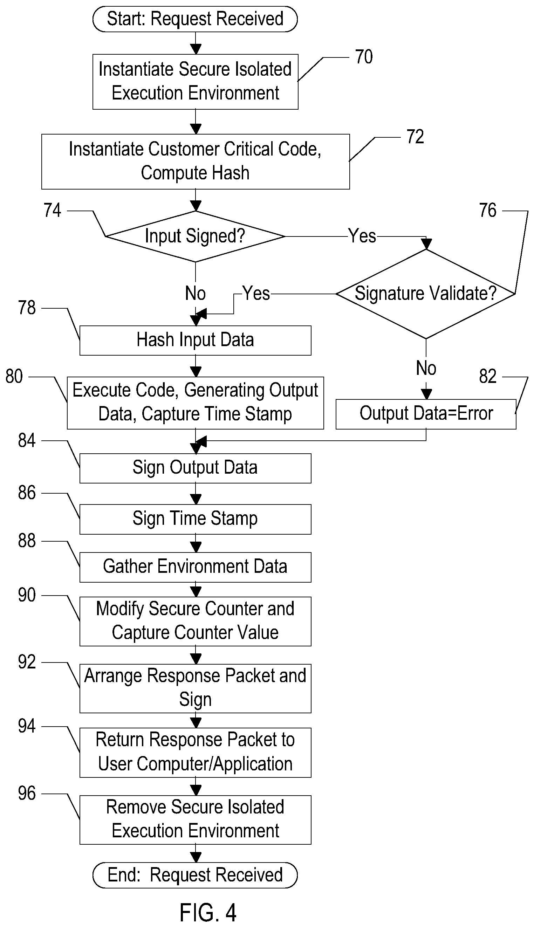

Fig. 4 is a flowchart illustrating one embodiment of operation of a secure server computer 20 to perform a secure execution transaction in the system of Fig. 2. That is, the operation shown in Fig. 4 may occur in response to, or based on, receiving the request packet 48 from a user computer 22. While the blocks are shown in a particular order, other orders may be used. Various software modules on the secure server computer 20 may include a plurality of instructions which, when executed on the secure server computer 20, cause the secure server computer 20 to perform operations including the operations illustrated in Fig. 4 and described below. Thus, the plurality of instructions stored on a computer accessible storage medium and executed by a processor in the secure server computer 20 may result in the secure server computer 20 being configured to implement the operations described below.

The secure server computer 20 (and more particularly the secure isolated execution environment controller 30) may instantiate a secure isolated execution environment 24 to perform the secure execution transaction (block 70). For example, the controller 30 may cause the OS kernel 28 to allocate memory for the environment 24, and may load the libraries 38 and VM 36 into the environment 24. The libraries 38 and VM 36 may be loaded from a computer accessible storage medium in the secure server computer 20 (including, in an embodiment, another area of memory that is accessible to the controller 30 but not accessible to the environments 24). In an embodiment, the controller 30 may verify that the VM 36 and libraries 38 are not modified (e.g., hashing the code and comparing to a pregenerated hash). The controller 30 may also hash the code for inclusion in the environment data 58 and/or collect version information for the code.

The controller 30 may instantiate the customer critical code 10 in the secure isolated execution environment 24 (block 72). As with the VM 36 and the libraries 38, the controller 30 may load the code from a computer accessible storage medium into the environment 24, and may compute the hash of the code 10. The controller 30 may optionally verify the hash against a copy of the hash 44 generated during installation of the code 10 on the computer 20. The controller 30 may save the hash for inclusion in the response packet 42.

The controller 30 may validate the request packet 48, and if the signature does not validate (decision block 76, "no" leg), the controller 30 may generate output data indicating the error (block 82). The user computer 22 (and more particularly the application 40) has the option to sign the input data 12 and/or encrypt the input data 12. If the input data 12 is signed (or encrypted) (decision block 74, "yes" leg), the customer critical code 10 execution in the environment 24 may decrypt the data and/or validate (and authenticate) the signature (decision block 76). If the application signature validates correctly (decision block 76, "yes" leg) or the input data is not signed (decision block 74, "no" leg), the controller 30 may hash the input data 12 for inclusion in the response packet 42 (block 78). The computer 20 may execute the code 10 in the environment 24, generating the output data 14 (block 80). The computer 20 may also capture the time stamp for completion of the execution of the code 10. If the request packet signature and or the optional input data signature does not validate and authenticate correctly (decision block 76, "no" leg), the controller 30 may generate output data 14 indicating the error (block 82).

The controller 30 may communicate with the HSM functions 32 to sign the output data 14 (block 84) and to sign the time stamp captured when the code 10 was instantiated (block 86). The controller 30 may gather the environment data 58, including the environment data discussed above as well as any other data (e.g., hardware identifiers and the like) (block 88). The controller 30 may also communicate with the HSM functions 32 to modify the secure counter, and to capture the modified counter value for inclusion in the response packet 42 (block 90). The counter may be modified in any fashion, as long as the counter value is monotonically moving the same direction (e.g., increasing or decreasing). Thus, the counter may be incremented by one or any other amount if the counter is monotonically increasing, or may be decremented by one or any other amount if the counter is monotonically decreasing. In an embodiment, the counter may be monotonically increasing. Thus, the counter may be an indication of the number of executions of the customer critical code 10.

The controller 30 may arrange or expand the various data fields of the response packet 42 (e.g., as shown in Fig. 3 for an embodiment), and may communicate with the HSM functions 32 to sign the response packet (block 92). The controller 92 may return the signed response packet 42 to the user computer 22/application 40, using the trusted channel (block 94). The controller 30 may then delete the instance of the secure isolated execution environment 24 (block 96). The memory allocated for the environment 24 may be released to the OS kernel 28 for allocation to another instance of the environment 24 or any other use. In an embodiment, sensitive data in the environment 24 (e.g., the code 10, the input data 12, the output data 14, the request packet 42, and the response packet 42) may be zeroed out or otherwise overwritten prior to releasing the memory to the OS kernel 28. Removing the environment 24 may complete the transactional nature of the secure execution transaction, since any state related to the transaction may have been deleted from the server computer 20. In an embodiment, for efficiency reasons, the secure isolated execution environment 24 may reinstantiated after deletion (and the customer critical code 10 may be preloaded into the secure isolated execution environment 24) so that it is ready for the next request packet to be received. Thus, block 70 and 72 may be performed at the end of a preceding request rather than at the initiation of a current request.

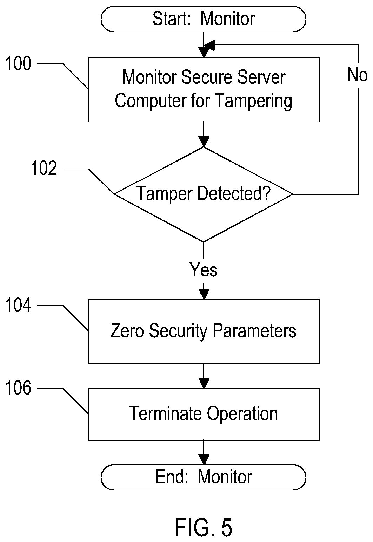

Fig. 5 is a flowchart illustrating one embodiment of monitoring for tamper protection in one embodiment of a secure server computer. The tamper protection may include detecting tampering with a secure physical enclosure of the server computer 20, to prevent modifications of the environment executing the code by an attacker. The tamper protection may also include detecting electronic tampering, such as detecting attempts to "hack into" the computer 20 or detecting partial or complete success in such hacking. While the blocks are shown in a particular order, other orders may be used. The server computer 20 may include a combination of hardware and a plurality of instructions executed on the computer 20 (e.g., from the OS kernel 28, the HSM functions 32, or the secure execution environment controller 20). That is, various software modules on the secure server computer 20 may include a plurality of instructions which, when executed on the secure server computer 20, cause the secure server computer 20 to perform operations including the operations illustrated in Fig. 5 and described below. Thus, the plurality of instructions stored on a computer accessible storage medium and executed by a processor in the secure server computer 20 may result in the secure server computer 20 being configured to implement the operations described below.

The server computer 20 may monitor operation of the computer 20 to detect evidence of attempted and/or successful tampering (block 100). The monitoring may continue as long as tampering is not detected (decision block 102, "no" leg). However, if tampering is detected (decision block 102, "yes" leg), the computer 20 may zero out (or otherwise overwrite) various security parameters such as keys maintained in the HSM (block 104) and may terminate operation (block 106). Thus, the user application 40 may be protected against the assumption that the secure server computer 20 remains secure.

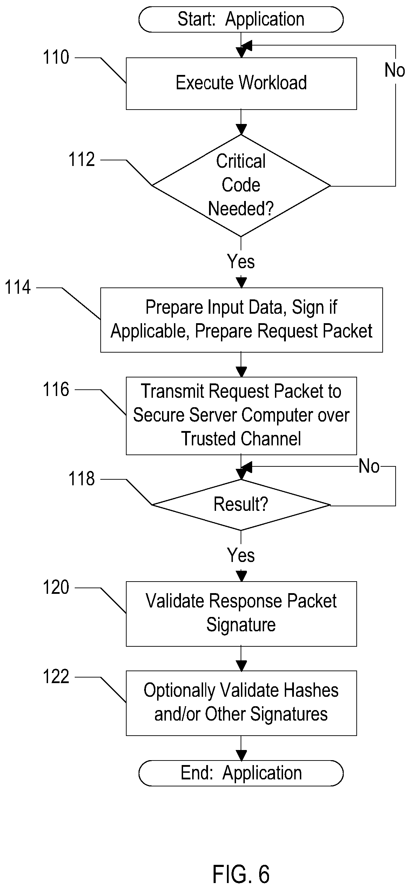

Fig. 6 is a flowchart illustrating operation of one embodiment of an application 40 requesting a secure execution transaction and processing the response packet 42. While the blocks are shown in a particular order, other orders may be used. Various software modules on the user computer 22 may include a plurality of instructions which, when executed on the user computer 22, cause the user computer 22 to perform operations including the operations illustrated in Fig. 6 and described below. Thus, the plurality of instructions stored on a computer accessible storage medium and executed by a processor in the user computer 22 may result in the user computer 22 being configured to implement the operations described below.

The application 40 may be executing its workload, performing various operations for which the application 40 is designed (block 110). That is, the portion of the workload that does not require secure, provable execution may be executed by the application 40 on the user computer 22. When the application 40 reaches a point at which execution of the customer critical code 10 is needed (decision block 112, "yes" leg), the application 40 may prepare the input data 12 for the transaction, and may sign and/or encrypt the input data, if applicable. The application may prepare the request packet 48, and sign the request packet (block 114). The application 40 may cause the user computer 22 to transmit the request packet 48 to the secure server computer 20 over the trusted channel (block 116). For example, the application 40 may include a gRPC call to the secure server computer 20 that identifies the requested customer critical code 10.

The application 40 may await the return of the response packet 42 from the secure server computer 20 (decision block 118). In an embodiment, the application may "go to sleep," awaiting the response packet 42 without actively performing other operations and allowing other code in the user computer 22 to be scheduled and executed. Alternatively, the application 40 may continue with other execution and periodically poll for the response packet 42. Any of these options may be represented by decision block 118.

When the response packet 42 is returned (decision block 118, "yes" leg), the application 40 may at least validate the packet signature 62, authenticating the response packet 42 (block 120). Optionally, the application 40 may also validate/authenticate other signed data (e.g., the output data 54 and the time stamp 56) and/or may validate the hashes provided in the response packet 42 (e.g., the hash 52 of the input data 12 maybe compared to a hash of the input data 12 generated by the application when preparing the transaction request, and hash 50 of the customer critical code 10 may be compared to the hash 44 of the customer critical code 10 stored on the user computer 22) (block 122).

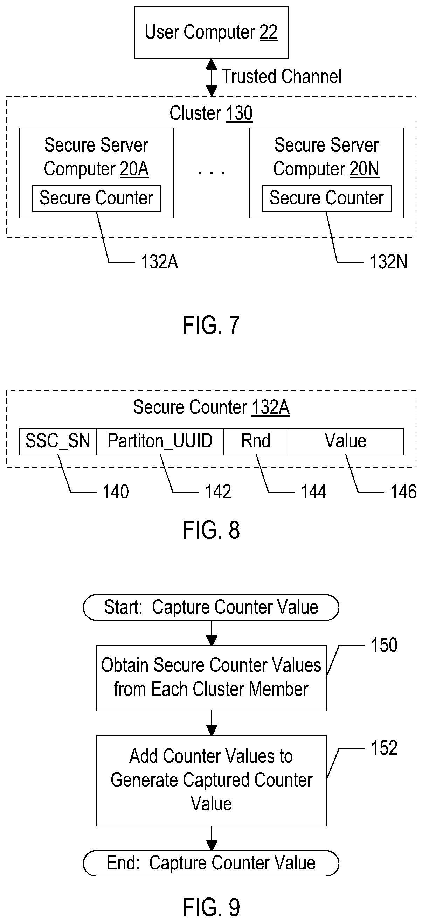

While the description above refers to a secure server computer 20, in some cases it may be desirable to have a plurality of secure server computers 20 to provide higher reliability, availability, and scalability for a system. For example, reliability, availability, and scalability may be required to meet various enterprise-level requirements. Fig. 7 is a block diagram of an embodiment of a system to implement a secure execution transaction in such an enterprise form. In the embodiment of Fig. 7, the user computer 22 is coupled via a trusted channel to a cluster 130 including a plurality of secure server computers 20A-20N. The secure server computers 20A-20N may have varying levels of independence depending on the desired level of reliability, availability, and scalability. For example, the cluster 130 may supply independent power to each of the secure server computers 20A-20N, so that a power failure on one secure server computer 20A-20N may still leave additional secure server computers 20A-20N available. The secure server computers 20A-20N may be physically distributed over a geographic area to reduce the likelihood that environmental factors (e.g., natural disasters such as hurricanes, floods, earthquakes, etc.) will affect the availability of the secure server computers 20A-20N. The cluster 130 may be part of a cloud computing environment, for example, or may be any geographically distributed by networked group of secure server computers 20A-20N. While this embodiment illustrates the cluster being used for secure execution transactions, generally any service may be provided by a cluster of server computers, where any server computer in the cluster may handle a given request for the service from a given requestor. The secure server computers 20A-20N may be dedicated to performing the secure execution transaction with respect to the customer critical code 10. Alternatively, the secure server computers 20A-20N may have a partition that is cloned from/synchronized to the same partition on other secure server computers 20A-20N. The partitions may include the HSM key material for the attestations that are to be made for the secure execution transactions (or other services, for other embodiments).

The secure server computers 20A-20N also have their own secure counters 132A-132N that operate independently. While the independence provides high reliability, availability and scalability, the independence also presents a challenge to ensuring monotonicity. For example, the challenges may include mechanisms to interrupt the secure server computers 20A-20N to synchronize the secure counters, to backup and restore the counters, etc. Ensuring monotonicity is an important facet of ensuring that the logical order of a series of executions can be established, even if those executions occurred on different server computers. To support the desired monotonic features of the counter, the counters 132A-132N may be provided with a unique portion that depends on an identifier of the partition and an identifier of the secure server computer, as well as a random portion. For example, Fig. 8 is a block diagram of one embodiment of a secure counter 132A. Other counters 132A may be similar. In the embodiment of Fig. 8, the secure counter 132A includes a plurality of fields such as a secure server computer serial number (SSC_SN) field 140, a partition universally unique identifier (UUID) 142, a random field 144, and a value field 146. The SSC_SN may be an identifier of the system (e.g., assigned by the manufacturer of the secure server computer).

A UUID, when generated according to standard methods, is unique for practical purposes. UUID uniqueness does not depend on a central registration authority or coordination between the parties generating them, unlike other numbering schemes. While the probability that a UUID will be duplicated is not zero, it is close enough to zero to be negligible. Thus, a UUID may be created and may be used it to identify a partition with near certainty that the identifier does not duplicate one that has already been, or will be, created. When the partition 130 is created, the UUID may be generated. The random field 144 may be a random value generated by the computer 20A. Accordingly, each time a partition is created on the computer 20A, or a synchronization or backup/restore of the system or the partition is performed, the random value may be different. The random value may help ensure monotonic behavior. For example, since a new random value is generated on each restore, a replay of old transactions cannot be performed because the secure counter will be different. That is, the secure counter after the restore has a new random number associated with it, and so the secure counter is identified different from the secure counter on the same secure server computer 20A-20N from before the restore. Similarly, the serial number may prevent replays if a synchronization is interrupted, since turning off a computer would permit an old counter to be preserved. The value field 146 may store the value that is incremented to form the new counter value at each instance.

To provide a monotonically increasing counter that can be compared across the partition, the counter that is captured for a given secure execution transaction may be the sum of the counter values in the secure counters 132A-132N within the partition. For example, Fig. 9 is a flowchart illustrating operation of one embodiment of capturing a counter value for a secure execution transaction (e.g., part of block 90 in Fig. 4). While the blocks are shown in a particular order, other orders may be used. Various software modules on the secure server computers 20A-20N and/or one or more computers that control the partition 130 may include a plurality of instructions which, when executed on the computer, cause the computer to perform operations including the operations illustrated in Fig. 9 and described below. Thus, the plurality of instructions stored on a computer accessible storage medium and executed by a processor in the computer may result in the computer being configured to implement the operations described below.

The computer may obtain the secure counter values from each partition member (block 150). For example, the computer may communicate with each secure server computer 20A-20N in the partition 130, requesting the secure counter value from that partition member. The receiving secure server computer 20A-20N may communicate with its HSM functions 32 to obtain the secure counter value and may respond to the requesting computer with the value. In an embodiment, only the secure server computer 20A-20N that is capturing the value may cause the secure counter value to increment. However, other counters on other secure server computers 20A-20N may have been incremented due to execution of the customer critical code 10 on those secure server computers 20A-20N. Accordingly, the difference between two successive counter values captured by a given secure server computer 20A-20N may vary over time.

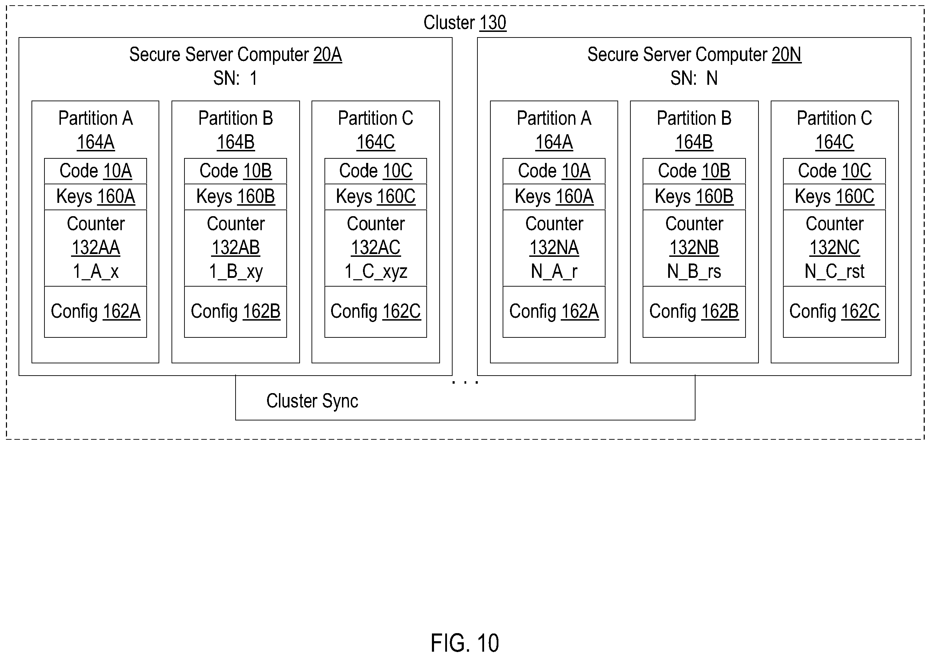

Fig. 10 is a block diagram of one embodiment of the cluster 130 shown in greater detail for one embodiment. In the illustrated embodiment, secure servers 20A and 20N are shown including multiple partitions (e.g., three partitions 164A-164C, although more or fewer partitions may be included in other embodiments). Each partition 164A-164C may be dedicated to a different service, such as a different customer critical code 10A-10C. Thus, the partition A 164A is replicated (or cloned) across secure servers 20A and 20N (and possibly other servers in the cluster, not shown in Fig. 10). The partition A 164A includes the customer critical code 10A, corresponding keys 160A (which would be in the HSM functions 32), a corresponding secure counter which has unique versions 132AA and 132NA), and various configuration 162A including the secure isolated execution environment 24 shown in Fig. 2. Similarly, the partition B 164B and the partition C 164C is replicated across secure servers 20A and 20N (and possibly other servers in the cluster, not shown in Fig. 10). The partition B 164B includes the customer critical code 10B (different code than the customer critical code 10A), corresponding keys 160B (which would be in the HSM functions 32 and differ from the keys 160A), a corresponding secure counter which has unique versions 132AB and 132NB), and various configuration 162B including the secure isolated execution environment 24 shown in Fig. 2; and the partition C 164C includes the customer critical code 10C (different code than the customer critical code 10A and the customer critical code 10B), corresponding keys 160C (which would be in the HSM functions 32 and differ from the keys 160A and the keys 160B), a corresponding secure counter which has unique versions 132AC and 132NC), and various configuration 162C including the secure isolated execution environment 24 shown in Fig. 2. It is noted that not every secure server computer 20A-20N need include every partition. If a given partition has lower reliability, availability, and scalability requirements (or is simply used less frequently), it may be included on fewer servers than other partitions.

As mentioned previously, each secure server computer 20A-20N may have a serial number (e.g., serial number (SN) 1 for secure server computer 20A and serial number N for secure server computer 20N). Additionally, each partition 164A-164C may have a UUID, represented as "A", "B", and "C" in Fig. 10. Accordingly, the serial number field of each counter 132AA-132AC may be 1 and the partition UUID field of each counter 132AA-132AC may be A, B, or C, respectively. Additionally, the random field of each counter 132AA-132AC may have a random number in secure server computer 20A, represented as x, xy, and xyz, respectively. Thus, the static fields of the counter 132AA may be 1_A_x, the static fields of counter 132AB may be 1_B_xy, and the static fields of the counter 132AC may be 1_C_xyz. Similarly, the static fields of counter 132NA may be N_A_r; the static fields of counter 132NB may be N_B_rs; and the static fields of the counter 132NC may be N_C_rst.

The secure server computers 20A-20N may be coupled via any form of network for cluster synchronization, shown as "Cluster Sync" in Fig. 10.

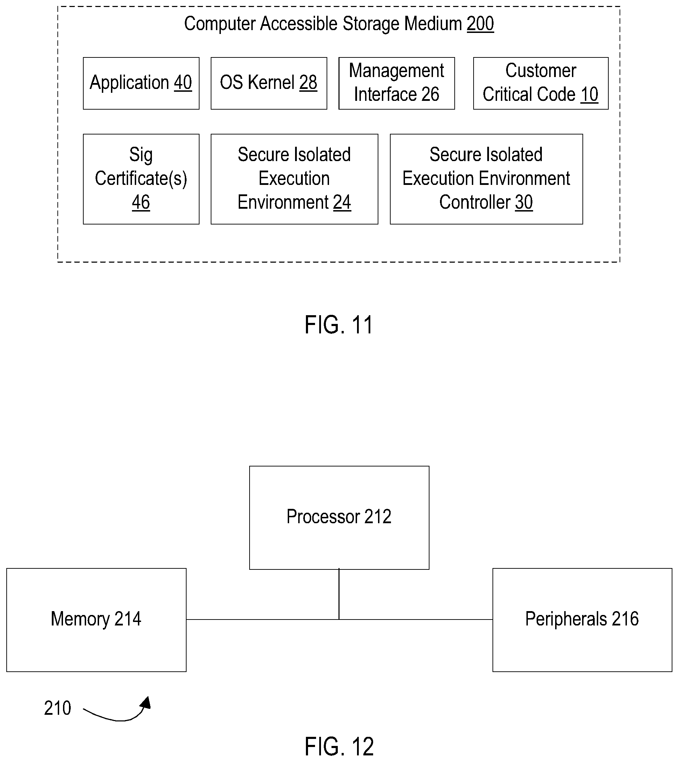

Fig. 11 is a block diagram of one embodiment of a computer accessible storage medium 200. Generally speaking, a computer accessible storage medium may include any storage media accessible by a computer during use to provide instructions and/or data to the computer. For example, a computer accessible storage medium may include storage media such as magnetic or optical media, e.g., disk (fixed or removable), tape, CD-ROM, DVD-ROM, CD-R, CD-RW, DVD-R, DVD-RW, or Blu-Ray. Storage media may further include volatile or non-volatile memory media such as RAM (e.g., synchronous dynamic RAM (SDRAM), Rambus DRAM (RDRAM), static RAM (SRAM), etc.), ROM, or Flash memory. The storage media may be physically included within the computer to which the storage media provides instructions/data. Alternatively, the storage media may be connected to the computer. For example, the storage media may be connected to the computer over a network or wireless link, such as network attached storage. The storage media may be connected through a peripheral interface such as the Universal Serial Bus (USB). Generally, the computer accessible storage medium 200 may store data in a non-transitory manner, where non-transitory in this context may refer to not transmitting the instructions/data on a signal. For example, non-transitory storage may be volatile (and may lose the stored instructions/data in response to a power down) or non-volatile.

The computer accessible storage medium 200 in Fig. 11 may store code forming the application 40, the OS kernel 28, the management interface 26, the customer critical code 10, the secure isolated execution environment 24 (e.g., the VM 36 and libraries 38), the secure isolated execution environment controller 30, etc. The computer accessible storage medium 200 may still further store one or more data structures such signature certificates 46. The application 40, the OS kernel 28, the management interface 26, the customer critical code 10, the secure isolated execution environment 24 (e.g., the VM 36 and libraries 38), the secure isolated execution environment controller 30 may comprise instructions which, when executed, implement the operation described above for these components.

Turning now to Fig. 12, a block diagram of one embodiment of a computer system 210 is shown. The computer system 210 may be an example of a user computer 22 and/or a secure server computer 20. In the embodiment of Fig. 12, the computer system 210 includes at least one processor 212, a memory 214, and various peripheral devices 216. The processor 212 is coupled to the memory 214 and the peripheral devices 216.

The processor 212 is configured to execute instructions, including the instructions in the software described herein. In various embodiments, the processor 212 may implement any desired instruction set (e.g., Intel Architecture-32 (IA-32, also known as x86), IA-32 with 64 bit extensions, x86-64, PowerPC, Sparc, MIPS, ARM, IA-64, etc.). In some embodiments, the computer system 210 may include more than one processor. The processor 212 may be the CPU (or CPUs, if more than one processor is included) in the system 210. The processor 212 may be a multi-core processor, in some embodiments.

The processor 212 may be coupled to the memory 214 and the peripheral devices 216 in any desired fashion. For example, in some embodiments, the processor 212 may be coupled to the memory 214 and/or the peripheral devices 216 via various interconnect. Alternatively, or in addition, one or more bridges may be used to couple the processor 212, the memory 214, and the peripheral devices 216.

The memory 214 may comprise any type of memory system. For example, the memory 214 may comprise DRAM, and more particularly double data rate (DDR) SDRAM, RDRAM, etc. A memory controller may be included to interface to the memory 214, and/or the processor 212 may include a memory controller. The memory 214 may store the instructions to be executed by the processor 212 during use, data to be operated upon by the processor 212 during use, etc.

Peripheral devices 216 may represent any sort of hardware devices that may be included in the computer system 210 or coupled thereto (e.g., storage devices, optionally including a computer accessible storage medium 200 such as the one shown in Fig. 10), other input/output (I/O) devices such as video hardware, audio hardware, user interface devices, networking hardware, various sensors, etc.). Peripheral devices 216 may further include various peripheral interfaces and/or bridges to various peripheral interfaces such as peripheral component interconnect (PCI), PCI Express (PCIe), universal serial bus (USB), etc. The interfaces may be industry-standard interfaces and/or proprietary interfaces. In some embodiments, the processor 212, the memory controller for the memory 214, and one or more of the peripheral devices and/or interfaces may be integrated into an integrated circuit (e.g., a system on a chip (SOC)).

The computer system 210 may be any sort of computer system, including general purpose computer systems such as desktops, laptops, servers, etc. The computer system 210 may be a portable system such as a smart phone, personal digital assistant, tablet, etc.

The present disclosure includes references to "an "embodiment" or groups of "embodiments" (e.g., "some embodiments" or "various embodiments"). Embodiments are different implementations or instances of the disclosed concepts. References to "an embodiment," "one embodiment," "a particular embodiment," and the like do not necessarily refer to the same embodiment.

This disclosure may discuss potential advantages that may arise from the disclosed embodiments. Not all implementations of these embodiments will necessarily manifest any or all of the potential advantages. Whether an advantage is realized for a particular implementation depends on many factors, some of which are outside the scope of this disclosure. In fact, there are a number of reasons why an implementation that falls within the scope of the claims might not exhibit some or all of any disclosed advantages. For example, a particular implementation might include other circuitry outside the scope of the disclosure that, in conjunction with one of the disclosed embodiments, negates or diminishes one or more the disclosed advantages. Furthermore, suboptimal design execution of a particular implementation (e.g., implementation techniques or tools) could also negate or diminish disclosed advantages. Even assuming a skilled implementation, realization of advantages may still depend upon other factors such as the environmental circumstances in which the implementation is deployed. For example, inputs supplied to a particular implementation may prevent one or more problems addressed in this disclosure from arising on a particular occasion, with the result that the benefit of its solution may not be realized. Given the existence of possible factors external to this disclosure, it is expressly intended that any potential advantages described herein are not to be construed as claim limitations that must be met to demonstrate infringement. Rather, identification of such potential advantages is intended to illustrate the type(s) of improvement available to designers having the benefit of this disclosure. That such advantages are described permissively (e.g., stating that a particular advantage "may arise") is not intended to convey doubt about whether such advantages can in fact be realized, but rather to recognize the technical reality that realization of such advantages often depends on additional factors.

Unless stated otherwise, embodiments are non-limiting. That is, the disclosed embodiments are not intended to limit the scope of claims that are drafted based on this disclosure, even where only a single example is described with respect to a particular feature. The disclosed embodiments are intended to be illustrative rather than restrictive, absent any statements in the disclosure to the contrary. The application is thus intended to permit claims covering disclosed embodiments, as well as such alternatives, modifications, and equivalents that would be apparent to a person skilled in the art having the benefit of this disclosure.

Because this disclosure is a legal document, various terms and phrases may be subject to administrative and judicial interpretation. Public notice is hereby given that the following paragraphs, as well as definitions provided throughout the disclosure, are to be used in determining how to interpret claims that are drafted based on this disclosure.

References to a singular form of an item (i.e., a noun or noun phrase preceded by "a," "an," or "the") are, unless context clearly dictates otherwise, intended to mean "one or more." Reference to "an item" in a claim thus does not, without accompanying context, preclude additional instances of the item. A "plurality" of items refers to a set of two or more of the items.

The word "may" is used herein in a permissive sense (i.e., having the potential to, being able to) and not in a mandatory sense (i.e., must).

The terms "comprising" and "including," and forms thereof, are open-ended and mean "including, but not limited to."

When the term "or" is used in this disclosure with respect to a list of options, it will generally be understood to be used in the inclusive sense unless the context provides otherwise. Thus, a recitation of "x or y" is equivalent to "x or y, or both," and thus covers 1) x but not y, 2) y but not x, and 3) both x and y. On the other hand, a phrase such as "either x or y, but not both" makes clear that "or" is being used in the exclusive sense.

A recitation of "w, x, y, or z, or any combination thereof" or "at least one of ... w, x, y, and z" is intended to cover all possibilities involving a single element up to the total number of elements in the set. For example, given the set [w, x, y, z], these phrasings cover any single element of the set (e.g., w but not x, y, or z), any two elements (e.g., w and x, but not y or z), any three elements (e.g., w, x, and y, but not z), and all four elements. The phrase "at least one of ... w, x, y, and z" thus refers to at least one element of the set [w, x, y, z], thereby covering all possible combinations in this list of elements. This phrase is not to be interpreted to require that there is at least one instance of w, at least one instance of x, at least one instance of y, and at least one instance of z.

Various "labels" may precede nouns or noun phrases in this disclosure. Unless context provides otherwise, different labels used for a feature (e.g., "first circuit," "second circuit," "particular circuit," "given circuit," etc.) refer to different instances of the feature. Additionally, the labels "first," "second," and "third" when applied to a feature do not imply any type of ordering (e.g., spatial, temporal, logical, etc.), unless stated otherwise.

The phrase "based on" or is used to describe one or more factors that affect a determination. This term does not foreclose the possibility that additional factors may affect the determination. That is, a determination may be solely based on specified factors or based on the specified factors as well as other, unspecified factors. Consider the phrase "determine A based on B." This phrase specifies that B is a factor that is used to determine A or that affects the determination of A. This phrase does not foreclose that the determination of A may also be based on some other factor, such as C. This phrase is also intended to cover an embodiment in which A is determined based solely on B. As used herein, the phrase "based on" is synonymous with the phrase "based at least in part on."

The phrases "in response to" and "responsive to" describe one or more factors that trigger an effect. This phrase does not foreclose the possibility that additional factors may affect or otherwise trigger the effect, either jointly with the specified factors or independent from the specified factors. That is, an effect may be solely in response to those factors, or may be in response to the specified factors as well as other, unspecified factors. Consider the phrase "perform A in response to B." This phrase specifies that B is a factor that triggers the performance of A, or that triggers a particular result for A. This phrase does not foreclose that performing A may also be in response to some other factor, such as C. This phrase also does not foreclose that performing A may be jointly in response to B and C. This phrase is also intended to cover an embodiment in which A is performed solely in response to B. As used herein, the phrase "responsive to" is synonymous with the phrase "responsive at least in part to." Similarly, the phrase "in response to" is synonymous with the phrase "at least in part in response to."

Within this disclosure, different entities (which may variously be referred to as "units," "circuits," other components, etc.) may be described or claimed as "configured" to perform one or more tasks or operations. This formulation-[entity] configured to [perform one or more tasks]-is used herein to refer to structure (i.e., something physical). More specifically, this formulation is used to indicate that this structure is arranged to perform the one or more tasks during operation. A structure can be said to be "configured to" perform some task even if the structure is not currently being operated. Thus, an entity described or recited as being "configured to" perform some task refers to something physical, such as a device, circuit, a system having a processor unit and a memory storing program instructions executable to implement the task, etc. This phrase is not used herein to refer to something intangible.

**In** some cases, various units/circuits/components may be described herein as performing a set of task or operations. It is understood that those entities are "configured to" perform those tasks/operations, even if not specifically noted.

The term "configured to" is not intended to mean "configurable to." An unprogrammed FPGA, for example, would not be considered to be "configured to" perform a particular function. This unprogrammed FPGA may be "configurable to" perform that function, however. After appropriate programming, the FPGA may then be said to be "configured to" perform the particular function.

Different "circuits" may be described in this disclosure. These circuits or "circuitry" constitute hardware that includes various types of circuit elements, such as combinatorial logic, clocked storage devices (e.g., flip-flops, registers, latches, etc.), finite state machines, memory (e.g., random-access memory, embedded dynamic random-access memory), programmable logic arrays, and so on. Circuitry may be custom designed, or taken from standard libraries. In various implementations, circuitry can, as appropriate, include digital components, analog components, or a combination of both. Certain types of circuits may be commonly referred to as "units" (e.g., a decode unit, an arithmetic logic unit (ALU), functional unit, memory management unit (MMU), etc.). Such units also refer to circuits or circuitry.

The disclosed circuits/units/components and other elements illustrated in the drawings and described herein thus include hardware elements such as those described in the preceding paragraph. In many instances, the internal arrangement of hardware elements within a particular circuit may be specified by describing the function of that circuit. For example, a particular "decode unit" may be described as performing the function of "processing an opcode of an instruction and routing that instruction to one or more of a plurality of functional units," which means that the decode unit is "configured to" perform this function. This specification of function is sufficient, to those skilled in the computer arts, to connote a set of possible structures for the circuit.

In various embodiments, as discussed in the preceding paragraph, circuits, units, and other elements defined by the functions or operations that they are configured to implement. The arrangement of such circuits/units/components with respect to each other and the manner in which they interact form a microarchitectural definition of the hardware that is ultimately manufactured in an integrated circuit or programmed into an FPGA to form a physical implementation of the microarchitectural definition. Thus, the microarchitectural definition is recognized by those of skill in the art as structure from which many physical implementations may be derived, all of which fall into the broader structure described by the microarchitectural definition. That is, a skilled artisan presented with the microarchitectural definition supplied in accordance with this disclosure may, without undue experimentation and with the application of ordinary skill, implement the structure by coding the description of the circuits/units/components in a hardware description language (HDL) such as Verilog or VHDL. The HDL description is often expressed in a fashion that may appear to be functional. But to those of skill in the art in this field, this HDL description is the manner that is used transform the structure of a circuit, unit, or component to the next level of implementational detail. Such an HDL description may take the form of behavioral code (which is typically not synthesizable), register transfer language (RTL) code (which, in contrast to behavioral code, is typically synthesizable), or structural code (e.g., a netlist specifying logic gates and their connectivity). The HDL description may subsequently be synthesized against a library of cells designed for a given integrated circuit fabrication technology, and may be modified for timing, power, and other reasons to result in a final design database that is transmitted to a foundry to generate masks and ultimately produce the integrated circuit. Some hardware circuits or portions thereof may also be custom-designed in a schematic editor and captured into the integrated circuit design along with synthesized circuitry. The integrated circuits may include transistors and other circuit elements (e.g., passive elements such as capacitors, resistors, inductors, etc.) and interconnect between the transistors and circuit elements. Some embodiments may implement multiple integrated circuits coupled together to implement the hardware circuits, and/or discrete elements may be used in some embodiments. Alternatively, the HDL design may be synthesized to a programmable logic array such as a field programmable gate array (FPGA) and may be implemented in the FPGA. This decoupling between the design of a group of circuits and the subsequent low-level implementation of these circuits commonly results in the scenario in which the circuit or logic designer never specifies a particular set of structures for the low-level implementation beyond a description of what the circuit is configured to do, as this process is performed at a different stage of the circuit implementation process.

The fact that many different low-level combinations of circuit elements may be used to implement the same specification of a circuit results in a large number of equivalent structures for that circuit. As noted, these low-level circuit implementations may vary according to changes in the fabrication technology, the foundry selected to manufacture the integrated circuit, the library of cells provided for a particular project, etc. In many cases, the choices made by different design tools or methodologies to produce these different implementations may be arbitrary.

Moreover, it is common for a single implementation of a particular functional specification of a circuit to include, for a given embodiment, a large number of devices (e.g., millions of transistors). Accordingly, the sheer volume of this information makes it impractical to provide a full recitation of the low-level structure used to implement a single embodiment, let alone the vast array of equivalent possible implementations. For this reason, the present disclosure describes structure of circuits using the functional shorthand commonly employed in the industry.

Numerous variations and modifications will become apparent to those skilled in the art once the above disclosure is fully appreciated. It is intended that the following claims be interpreted to embrace all such variations and modifications.

## Claims

1. A computer system (210) comprising:
one or more processors (212) configured to execute instructions to cause the computer system (210) to perform operations; and
a non-transitory computer accessible storage medium (200) coupled to the one or more processors (212) and configured to store a plurality of instructions forming a secure execution environment controller configured to control a secure execution environment including a first code sequence,
wherein the secure execution environment is configured to execute the first code sequence on input data (12) provided from a separate computer system over a trusted channel to generate output data (14), and
wherein the secure execution environment controller is configured to cause the computer system (210) to digitally sign the output data (14), and
wherein the secure execution environment controller is configured to generate a response packet (42) that includes the digitally signed data and a hash of the input data, a hash of the first code sequence, environment data, and a time, and
wherein the secure execution environment controller is configured to cause the computer system to digitally sign the response packet (42) to attest to the execution on the input data (12) in the first code sequence which is unaltered from its installation in the computer system to produce the output data (14) in a specific secure execution environment at a specific time.

2. The computer system as recited in claim 1 wherein the secure execution environment is configured to transactionally execute the first code sequence.

3. The computer system as recited in claim 1 or 2 wherein the secure execution environment controller is configured to delete the secure execution environment subsequent to transmitting the response packet to the separate computer system.

4. The computer system as recited in claim 3 wherein the secure execution environment controller is configured to instantiate the secure execution environment subsequent to deletion of the secure execution environment and to load the first code sequence into the secure execution environment.

5. The computer system as recited in any preceding claim wherein the secure execution environment controller is configured to generate the hash of the first code sequence and is configured to include the hash in the digitally signed response packet to evidence that the first code sequence is unaltered from its installation on the computer system.

6. The computer system as recited in any preceding claim wherein the secure execution environment controller is configured to capture a time stamp that corresponds the execution of the first code sequence, and wherein the secure execution environment controller is configured to cause the computer system to digitally sign the time stamp, and wherein the secure execution environment controller is configured to include the signed time stamp in the digitally signed response packet to evidence the specific time.

7. The computer system as recited in claim 6 wherein the time stamp indicates a time at which execution finished and the output data is calculated.

8. The computer system as recited in any preceding claim wherein the secure execution environment controller is configured to generate the hash of the input data, wherein the secure execution environment controller is configured to include the hash in the digitally signed response packet to evidence execution on the input data.

9. The computer system as recited in any preceding claim wherein the secure execution environment controller is configured to collect the environment data describing the computer system, and wherein the secure execution environment controller is configured to include the environment data in the digitally signed response packet.

10. The computer system as recited in any preceding claim wherein the secure execution environment controller is configured to request a counter value maintained by the computer system, wherein the computer system is configured to modify the counter value based on the request from the secure execution environment controller, and wherein the secure execution environment controller is configure to include a value corresponding to the counter value in the digitally signed response packet.

11. The computer system as recited in claim 10 wherein the counter value is one of a plurality of counter values maintained by computer systems in a cluster, and wherein the computer system is configured to include a sum of the plurality of counter values as the value in the digitally signed response packet.

12. A method comprising:
executing, on a secure server computer system in a specific secure execution environment, a first code sequence on input data (12) provided from a separate computer system over a trusted channel to generate output data (14);
causing, by a secure execution environment controller executing on the secure server computer system, the secure server computer system to digitally sign the output data (14);
generating, by the secure execution environment controller, a response packet (42) that includes the digitally signed data and a hash of the input data, a hash of the first code sequence, environment data, and a time; and
causing, by the secure execution environment controller, the secure server computer system to digitally sign the response packet (42) to attest to the execution of the input data (12) in the first code sequence which is unaltered from its installation in the secure server computer system to produce the output data (14) in a specific secure execution environment at a specific time.

13. The method as recited in claim 12 further comprising:
transactionally executing the first code sequence; and
deleting the specific secure execution environment subsequent to transmitting the response packet to the separate computer system.

14. A computer program comprising instructions which when executed by a computer cause the computer to perform the method of any one of claims 12-13.

## Patentansprüche

1. Computersystem (210), umfassend:
einen oder mehrere Prozessoren (212), die konfiguriert sind, um Anweisungen auszuführen, um das Computersystem (210) zu veranlassen, Operationen durchzuführen; und
ein nichtflüchtiges computerzugängliches Speichermedium (200), das mit dem einen oder den mehreren Prozessoren (212) gekoppelt ist und konfiguriert ist, um eine Vielzahl von Anweisungen zu speichern, die eine sichere Ausführungsumgebungssteuerung bilden, die konfiguriert ist, um eine sichere Ausführungsumgebung zu steuern, die eine erste Codesequenz beinhaltet,
wobei die sichere Ausführungsumgebung konfiguriert ist, um die erste Codesequenz auf Eingabedaten (12) auszuführen, die von einem separaten Computersystem über einen vertrauenswürdigen Kanal bereitgestellt werden, um Ausgabedaten (14) zu erzeugen, und
wobei die sichere Ausführungsumgebungssteuerung konfiguriert ist, um das Computersystem (210) zu veranlassen, die Ausgabedaten (14) digital zu signieren, und
wobei die sichere Ausführungsumgebungssteuerung konfiguriert ist, um ein Antwortpaket (42) zu erzeugen, das die digital signierten Daten und einen Hash der Eingabedaten, einen Hash der ersten Codesequenz, Umgebungsdaten und eine Zeit beinhaltet, und
wobei die sichere Ausführungsumgebungssteuerung konfiguriert ist, um das Computersystem zu veranlassen, das Antwortpaket (42) digital zu signieren, um die Ausführung auf den Eingabedaten (12) in der ersten Codesequenz zu bestätigen, die von ihrer Installation in dem Computersystem unverändert ist, um die Ausgabedaten (14) in einer spezifischen sicheren Ausführungsumgebung zu einer spezifischen Zeit zu erzeugen.

2. Computersystem nach Anspruch 1, wobei die sichere Ausführungsumgebung konfiguriert ist, um die erste Codesequenz transaktionstechnisch auszuführen.

3. Computersystem nach Anspruch 1 oder 2, wobei die sichere Ausführungsumgebungssteuerung konfiguriert ist, um die sichere Ausführungsumgebung nach dem Übertragen des Antwortpakets an das separate Computersystem zu löschen.

4. Computersystem nach Anspruch 3, wobei die sichere Ausführungsumgebungssteuerung konfiguriert ist, um die sichere Ausführungsumgebung nach dem Löschen der sicheren Ausführungsumgebung zu instanziieren und die erste Codesequenz in die sichere Ausführungsumgebung zu laden.

5. Computersystem nach einem der vorhergehenden Ansprüche, wobei die sichere Ausführungsumgebungssteuerung konfiguriert ist, um den Hash der ersten Codesequenz zu erzeugen, und konfiguriert ist, um den Hash in das digital signierte Antwortpaket aufzunehmen, um nachzuweisen, dass die erste Codesequenz von ihrer Installation in dem Computersystem unverändert ist.

6. Computersystem nach einem der vorhergehenden Ansprüche, wobei die sichere Ausführungsumgebungssteuerung konfiguriert ist, um einen Zeitstempel zu erfassen, der der Ausführung der ersten Codesequenz entspricht, und wobei die sichere Ausführungsumgebungssteuerung konfiguriert ist, um das Computersystem zu veranlassen, den Zeitstempel digital zu signieren, und wobei die sichere Ausführungsumgebungssteuerung konfiguriert ist, um den signierten Zeitstempel in das digital signierte Antwortpaket aufzunehmen, um die spezifische Zeit nachzuweisen.

7. Computersystem nach Anspruch 6, wobei der Zeitstempel eine Zeit angibt, zu der die Ausführung beendet ist und die Ausgabedaten berechnet werden.

8. Computersystem nach einem der vorhergehenden Ansprüche, wobei die sichere Ausführungsumgebungssteuerung konfiguriert ist, um den Hash der Eingabedaten zu erzeugen, wobei die sichere Ausführungsumgebungssteuerung konfiguriert ist, um den Hash in das digital signierte Antwortpaket aufzunehmen, um die Ausführung auf den Eingabedaten nachzuweisen.

9. Computersystem nach einem der vorhergehenden Ansprüche, wobei die sichere Ausführungsumgebungssteuerung konfiguriert ist, um die Umgebungsdaten zu sammeln, die das Computersystem beschreiben, und wobei die sichere Ausführungsumgebungssteuerung konfiguriert ist, um die Umgebungsdaten in das digital signierte Antwortpaket aufzunehmen.

10. Computersystem nach einem der vorhergehenden Ansprüche, wobei die sichere Ausführungsumgebungssteuerung konfiguriert ist, um einen Zählerwert anzufordern, der von dem Computersystem verwaltet wird, wobei das Computersystem konfiguriert ist, um den Zählerwert basierend auf der Anforderung von der sicheren Ausführungsumgebungssteuerung zu modifizieren, und wobei die sichere Ausführungsumgebungssteuerung konfiguriert ist, um einen Wert, der dem Zählerwert entspricht, in das digital signierte Antwortpaket aufzunehmen.

11. Computersystem nach Anspruch 10, wobei der Zählerwert einer aus einer Vielzahl von Zählerwerten ist, die von Computersystemen in einem Cluster verwaltet werden, und wobei das Computersystem konfiguriert ist, um eine Summe der Vielzahl von Zählerwerten als den Wert in das digital signierte Antwortpaket aufzunehmen.

12. Verfahren, umfassend:
Ausführen, auf einem sicheren Server-Computersystem in einer spezifischen sicheren Ausführungsumgebung, einer ersten Codesequenz auf Eingabedaten (12), die von einem separaten Computersystem über einen vertrauenswürdigen Kanal bereitgestellt werden, um Ausgabedaten (14) zu erzeugen;
Veranlassen, durch eine sichere Ausführungsumgebungssteuerung, die auf dem sicheren Server-Computersystem ausgeführt wird, dass das sichere Server-Computersystem die Ausgabedaten (14) digital signiert;
Erzeugen, durch die sichere Ausführungsumgebungssteuerung, eines Antwortpakets (42), das die digital signierten Daten und einen Hash der Eingabedaten, einen Hash der ersten Codesequenz, Umgebungsdaten und eine Zeit beinhaltet; und
Veranlassen, durch die sichere Ausführungsumgebungssteuerung, dass das sichere Server-Computersystem das Antwortpaket (42) digital signiert, um die Ausführung der Eingabedaten (12) in der ersten Codesequenz zu bestätigen, die von ihrer Installation in dem sicheren Server-Computersystem unverändert ist, um die Ausgabedaten (14) in einer spezifischen sicheren Ausführungsumgebung zu einer spezifischen Zeit zu erzeugen.

13. Verfahren nach Anspruch 12, ferner umfassend:
transaktionstechnisches Ausführen der ersten Codesequenz; und
Löschen der spezifischen sicheren Ausführungsumgebung nach dem Übertragen des Antwortpakets an das separate Computersystem.

14. Computerprogramm, umfassend Anweisungen, die, wenn sie von einem Computer ausgeführt werden, den Computer veranlassen, das Verfahren nach einem der Ansprüche 12-13 durchzuführen.

## Revendications

1. Un système informatique (210) comprenant :
un ou plusieurs processeurs (212) configurés pour exécuter des instructions pour faire en sorte que le système informatique (210) effectue des opérations ; et
un support de stockage non transitoire accessible par calculateur (200), couplé aux un ou plusieurs processeurs (212) et configuré pour stocker une pluralité d'instructions formant un contrôleur d'environnement d'exécution sécurisé configuré pour contrôler un environnement d'exécution sécurisé comprenant une première séquence de code,
dans lequel l'environnement d'exécution sécurisé est configuré pour exécuter la première séquence de code sur des données d'entrée (12) produites en provenance d'un système informatique distinct sur un canal de confiance pour générer des données de sortie (14), et
dans lequel le contrôleur d'environnement d'exécution sécurisé est configuré pour faire en sorte que le système informatique (210) signe numériquement les données de sortie (14), et
dans lequel le contrôleur d'environnement d'exécution sécurisé est configuré pour générer un paquet en réponse (42) qui inclut les données signées numériquement et un hash des données d'entrée, un hash de la première séquence de code, des données d'environnement, et un temps, et
dans lequel le contrôleur d'environnement d'exécution sécurisé est configuré pour faire en sorte que le système informatique signe numériquement le paquet en réponse (42) pour attester de l'exécution des données d'entrée (12) dans la première séquence de code qui est intacte depuis son installation dans le système informatique, pour produire à un temps spécifique les données de sortie (14) dans un environnement d'exécution sécurisé spécifique.

2. Le système informatique tel qu'énoncé dans la revendication 1 dans lequel l'environnement d'exécution sécurisé est configuré pour exécuter transactionnellement la première séquence de code.

3. Le système informatique tel qu'énoncé dans la revendication 1 ou 2 dans lequel le contrôleur d'environnement d'exécution sécurisé est configuré pour effacer l'environnement d'exécution sécurisé à la suite de la transmission du paquet en réponse au système informatique distinct.

4. Le système informatique tel qu'énoncé dans la revendication 3 dans lequel le contrôleur d'environnement d'exécution sécurisé est configuré pour instancier l'environnement d'exécution sécurisé à la suite de l'effacement de l'environnement d'exécution sécurisé, et pour charger la première séquence de code dans l'environnement d'exécution sécurisé.

5. Le système informatique tel qu'énoncé dans l'une des revendications précédentes dans lequel le contrôleur d'environnement d'exécution sécurisé est configuré pour générer le hash de la première séquence de code, et est configuré pour inclure le hash dans le paquet en réponse signé numériquement pour prouver que la première séquence de code est intacte depuis son installation sur le système informatique.

6. Le système informatique tel qu'énoncé dans l'une des revendications précédentes dans lequel le contrôleur d'environnement d'exécution sécurisé est configuré pour capturer un horodatage qui correspond à l'exécution de la première séquence de code, et dans lequel le contrôleur d'environnement d'exécution sécurisé est configuré pour faire en sorte que le système informatique signe numériquement l'horodatage, et dans lequel le contrôleur d'environnement d'exécution sécurisé est configuré pour inclure l'horodatage signé dans le paquet en réponse signé numériquement pour prouver le temps spécifique.

7. Le système informatique tel qu'énoncé dans la revendication 6 dans lequel l'horodatage indique un temps auquel l'exécution a pris fin et les données de sortie ont été calculées.

8. Le système informatique tel qu'énoncé dans l'une des revendications précédentes dans lequel le contrôleur d'environnement d'exécution sécurisé est configuré pour générer le hash des données d'entrée, dans lequel le contrôleur d'environnement d'exécution sécurisé est configuré pour inclure le hash dans le paquet en réponse signé numériquement pour prouver l'exécution sur les données d'entrée.

9. Le système informatique tel qu'énoncé dans l'une des revendications précédentes dans lequel le contrôleur d'environnement d'exécution sécurisé est configuré pour recueillir les données d'environnement décrivant le système informatique, et dans lequel le contrôleur d'environnement d'exécution sécurisé est configuré pour inclure les données d'environnement dans le paquet en réponse signé numériquement.

10. Le système informatique tel qu'énoncé dans l'une des revendications précédentes dans lequel le contrôleur d'environnement d'exécution sécurisé est configuré pour recueillir une valeur de compteur entretenu par le système informatique, dans lequel le système informatique est configuré pour modifier la valeur de compteur sur la base de la requête en provenance du contrôleur d'environnement d'exécution sécurisé, et dans lequel le contrôleur d'environnement d'exécution sécurisé est configuré pour inclure une valeur correspondant à la valeur du compteur dans le paquet en réponse signé numériquement.

11. Le système informatique tel qu'énoncé dans la revendication 10 dans lequel la valeur de compteur est l'une d'entre une pluralité de valeurs de compteur entretenues par des systèmes informatiques d'un groupement, et dans lequel le système informatique est configuré pour inclure une somme de la pluralité des valeurs de compteur comme étant la valeur dans le paquet en réponse signé numériquement.

12. Un procédé comprenant :
l'exécution, sur un système informatique de serveur sécurisé dans un environnement d'exécution sécurisé spécifique, d'une première séquence de code sur des données d'entrée (12) produites en provenance d'un système informatique distinct sur un canal de confiance pour générer des données de sortie (14) ;
faire en sorte, par un contrôleur d'environnement d'exécution sécurisé s'exécutant sur le système informatique de serveur sécurisé, que le système informatique de serveur sécurisé signe numériquement les données de sortie (14) ;
la génération, par le contrôleur d'environnement d'exécution sécurisé, d'un paquet en réponse (42) qui inclut les données signées numériquement et un hash des données d'entrée, un hash de la première séquence de code, des données d'environnement, et un temps ; et
faire en sorte, par le contrôleur d'environnement d'exécution sécurisé, que le système informatique de serveur sécurisé signe numériquement le paquet en réponse (42) pour attester de l'exécution des données d'entrée (12) dans la première séquence de code qui est intacte depuis son installation dans le système informatique de serveur sécurisé, pour produire à un temps spécifique les données de sortie (14) dans un environnement d'exécution sécurisé spécifique.

13. Le procédé tel qu'énoncé dans la revendication 12 comprenant en outre :
l'exécution transactionnelle de la première séquence de code ; et
l'effacement de l'environnement d'exécution sécurisé spécifique à la suite de la transmission du paquet en réponse au système informatique distinct.

14. Un programme informatique comprenant des instructions qui, lorsqu'elles sont exécutées par un calculateur, font en sorte que le calculateur mette en œuvre le procédé de l'une des revendications 12 à 13.
